# EUROPEAN PATENT APPLICATION

(11) **EP 2 704 061 A2**
(43) Date of publication of application: **05.03.2014**
(21) Application number: 13181727.2
(22) Date of filing: 26.08.2013
(51) Int. Cl.: G06K 9/32

(54) **Apparatus and method for recognizing a character in terminal equipment**

(30) Priority: 27.08.2012 KR 20120093561
(71) Applicant: Samsung Electronics Co., Ltd, Gyeonggi-do 443-742 (KR)
(72) Inventor: Jang, Sihak, 443-742 Gyeonggi-do (KR); Kim, Seonhwa, 443-742 Gyeonggi-do (KR); Kim, Heejin, 443-742 Gyeonggi-do (KR); Park, Mijung, 443-742 Gyeonggi-do (KR)
(74) Representative: Nederlandsch Octrooibureau

(57) **Abstract**

A text recognition apparatus and method recognizes text in the image taken by a camera. The text recognition method of a mobile terminal includes displaying a preview image input from a camera; recognizing a text image where a pointer is placed on the preview image; displaying recognized text data and at least one action item corresponding to the recognized text data; and executing, when the action item is selected, an action mapped to the selected action item.

## Description

### TECHNICAL FIELD

The present disclosure relates to a text recognition apparatus and method of a mobile terminal and, in particular, to an apparatus and method for recognizing text in the image taken by a camera.

### BACKGROUND

Recently, mobile terminals are equipped with a touch panel that receives device control command and data input and a camera for acquiring images which are processed and stored in various format. Some mobile terminals are equipped with text and speech recognition functions.

Text recognition methods for mobile terminals recognize the characters in the image taken by a camera or downloaded from the Internet.

### SUMMARY

To address the above-discussed deficiencies, embodiments of the present disclosure provide an apparatus and method for recognizing characters in the image taken by the camera of the camera-equipped mobile terminal in real time.

In order to accomplish this, the present disclosure includes an apparatus and method for recognizing characters at a focused position in the preview image displayed by the camera-equipped mobile terminal and processing the recognition result with a predetermined function.

Also, the present disclosure includes an apparatus and method for recognizing characters in the image captured by the camera-equipped mobile terminal presenting the characters associated with a predetermined function, and executing a function corresponding to the characters selected among the presented characters.

Certain embodiments of the present disclosure include a text recognition method of a mobile terminal. The method includes displaying a preview image input from a camera; recognizing a text image where a pointer is placed on the preview image; displaying recognized text data and at least one action item corresponding to the recognized text data; and executing, when the action item is selected, an action mapped to the selected action item.

Certain embodiments of the present disclosure include a method for recognizing text including link information. The method includes displaying a preview image input from a camera; recognizing a link information text image where a pointer is placed on the preview image; displaying at least one action item for executing an action associated with the recognized text data and corresponding link information; and executing, when the item is selected, a function of the selected item based on the link information.
Certain embodiments of the present disclosure include a text recognition apparatus of a mobile terminal. The apparatus includes a camera that captures an image including text; an input unit for receiving an input signal; a control unit that recognizes a text image where a pointer is placed on the preview image, displays recognized text data and at least one action item corresponding to the recognized text data, and executes, when the action item is selected, an action mapped to the selected action item; and a display unit which displays a text recognition execution screen under the control of the control unit.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates the configuration of the terminal device according to embodiments of the present disclosure;

FIGS. 2A to 2N illustrate key screens displayed by the mobile terminal in the text recognition mode according to embodiments of the present disclosure;

FIG. 3 illustrates a text recognition mode process of the mobile terminal according to embodiments of the present disclosure;

FIG. 4 illustrates the preview mode text recognition process of the mobile terminal according to embodiments of the present disclosure;

FIG. 5 illustrates the captured image mode text recognition process of the mobile terminal according to embodiments of the present disclosure;

FIG. 6 illustrates the process of recognizing text from a preview image in the direct link mode according to embodiments of the present disclosure;

FIG. 7 illustrates the process of recognizing text of a capture image in the direct link mode according to embodiments of the present disclosure;

FIG. 8 illustrates the process of correcting the error in the recognized text in FIGS. 6 and 7;

FIGS. 9A to 9H illustrate screens displayed in association with the preview image text recognition procedure according to embodiments of the present disclosure;

FIGS. 10A to 10E illustrate screens displayed in association with the captured screen image text recognition procedure according to embodiments of the present disclosure;

FIG. 11 illustrates the process of recognizing words from the preview image in the dictionary mode according to embodiments of the present disclosure;

FIG. 12 illustrates a process of recognizing all words included in the captured image in the dictionary mode according to embodiments of the present disclosure;

FIG. 13 illustrates process of correcting error in the recognized word in FIG. 11 and 12;

FIGS. 14A and 14F illustrate screens displayed in association with the preview image text recognition procedure in the dictionary mode according to embodiments of the present disclosure; and

FIG. 15A and 15B illustrate screens displayed in association with the captured image text recognition procedure in the dictionary mode according to embodiments of the present disclosure.

### DETAILED DESCRIPTION

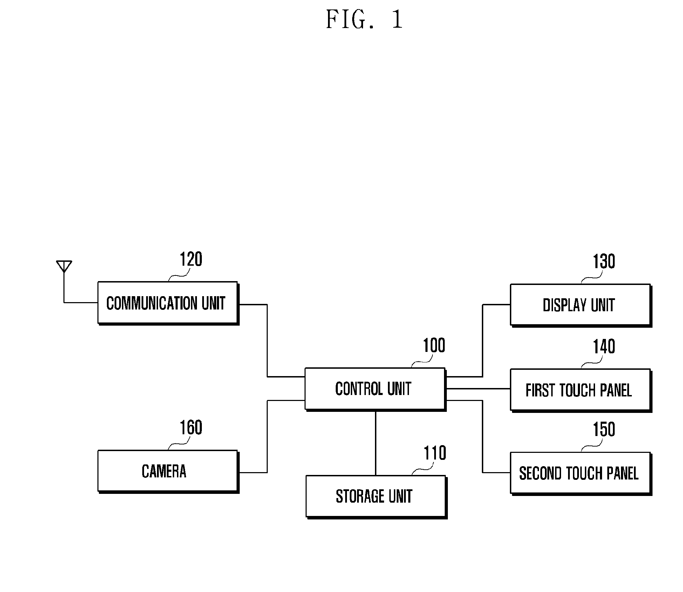

FIGURES 1 through 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device or system. embodiments of the present disclosure are described with reference to the accompanying drawings in detail. The same reference numbers are used throughout the drawings to refer to the same or like parts.

The necessity of recognizing characters in an image taken by a mobile terminal's camera in real time is on the rise. That is, there is a need of a method for recognizing characters at an intended region of the preview image displayed on the camera-equipped mobile terminal and executing an operation based on the recognition result.

The present disclosure relates to an apparatus and method for recognizing characters at a position focused in the preview image input from the camera of a camera-equipped mobile terminal and characters included in the screen captured in response to the capture request. The present disclosure is capable of checking a predetermined function upon detection of characters, displaying action items corresponding to the characters in the form of a popup window, and executing the action corresponding to the item selected by the user.

FIG. 1 illustrates the configuration of the terminal device according to embodiments of the present disclosure. Here, the terminal device is a mobile terminal such as cellular phone including smartphone and other digital devices including MP3 player, tablet computer, desktop computer, or the like.

Referring to FIG. 1, the communication unit 120 is responsible for radio communication with a base station. Here, the communication unit 120 includes a transmitter for up-converting and amplifying the transmission signal and a receiver for low noise amplifying and down-converting the received signal. The communication unit 120 includes a modulator and demodulator. The modulator modulates the transmission signal to output the modulation signal to the transmitter, and the demodulator demodulates the signal received by the receiver. The modulator/demodulator can be configured to support LTE, WCDMA, GSM, Wi-Fi, WIBRO, NFC, Bluetooth, etc. In embodiments of the present disclosure, it is assumed that the communication unit 120 includes LTE, Wi-Fi, and Bluetooth communication modules.

The camera 160 captures an image in response to a shooting command.

The control unit 100 controls the overall operations of the mobile terminal, particularly, recognition of characters at the position focused on the preview image input from the camera 160 and characters included in the screen image captured in response to a capture request. In the text input mode, the control unit 100 controls to check the preconfigured function, display action items corresponding to the characters recognized in the image captured by the camera 160 according to the checked function, and execute the action corresponding to the item selected by the user.

The memory 110 includes a program memory for storing an Operating System (OS) and programs associated with the operations of the text recognition method according to embodiments of the present disclosure and a data memory for storing tables for the operations of the terminal and data generated by the programs.

The display unit 130 displays information on the application running under the control of the control unit 100. The display unit 130 can be implemented with a Liquid Crystal Display (LCD) or an Organic Light Emitting Diode (OLED). The first touch panel 140 can be implemented in capacitive type or resistive type and generates the location information of the user's touch (e.g. finger touch) to control unit 100. The second touch panel 150 can be implemented in the form of EMR sensor pad to detect the touch made with a pen and generate a corresponding signal to the control unit 100. The display unit 130, the touch panel 140, and the ERM panel 150 can be integrated into a signal unit.

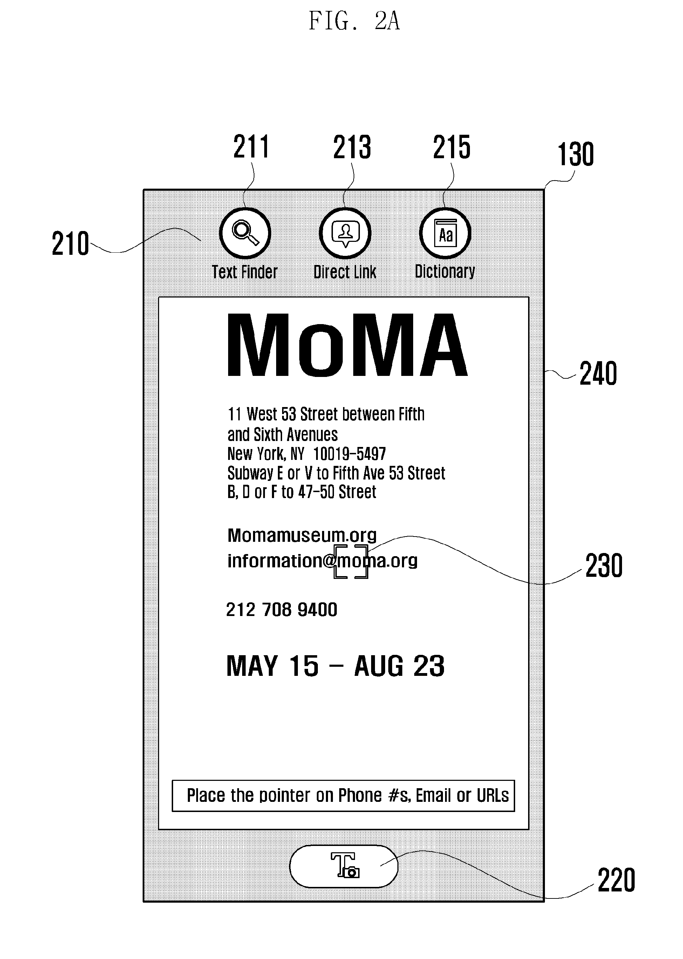

In the above-structured mobile terminal, the control unit 100 activates the camera 160 and recognizes the image taken by the camera 160 and executes a predetermined function according to the recognition result in the text recognition mode. FIGS. 2A to 2M are diagrams illustrating key screens displayed by the mobile terminal in the text recognition mode according to embodiments of the present disclosure.

In FIG. 2A, reference number 210 denotes recognition mode items presented in the form of menu icons for configuring recognition modes. In embodiments of the present disclosure, it is assumed that the mode items (menu icons) 210 include a text finder item 211 for searching for the texts set in recognizing character images, a direct link item 213 for executing a communication function using the recognized characters as a result of recognizing the character images on the screen, and a dictionary (translator) item 215 for displaying the lexical meaning of the recognized words as a result of recognizing character images. Reference number 220 is a capture icon for capturing the image input from the camera 160 as a capture image. Reference number 230 is a text pointer for pointing the position of the characters to be recognized. The recognition result (i.e. recognized characters) of the character images selected by the text point 230 can be presented below the text point 230 and the action items for executing the actions corresponding to the recognized characters. Reference number 240 denotes the screen image showing the image input by the camera 160. This image can be a preview mode. In the text recognition mode, characters of the character images on which text pointer 230 is placed are recognized in real time and, if a touch is made to the capture item 220 (for example, a scan button), the screen image is scanned entirely. The items include buttons (represented by icons) and the menu execution screen.

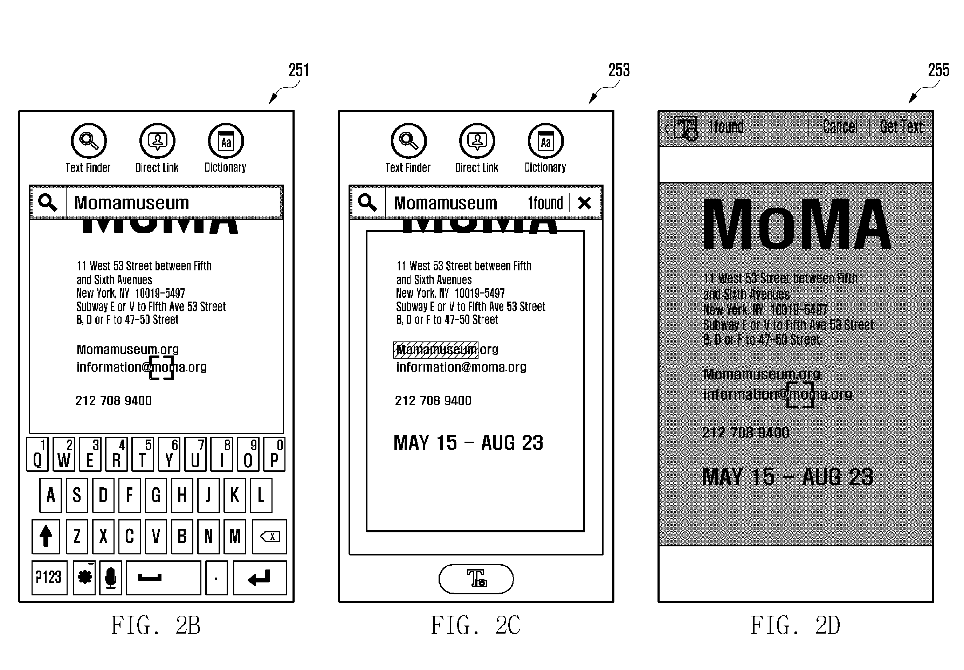

FIGS. 2B to 2D illustrates screens displayed in association with the text finder item 211 of FIG. 2A. If the text finder item 211 is selected, the control unit 100 displays a screen 251 (shown in FIG. 2B) including an SIP keyboard and a text input window. If a keyword is input in the text input window of screen 251, the control unit 100 searches the image for matching texts (keyword) and highlights the matching texts (keyword) as shown in the screen 253 of FIG. 2C. After completing the text search, a number of matches is indicated on the top side of the screen of the display unit 130. That is, if the text search mode is activated, the control unit 100 displays the keyword window and the SIP keyword to search for the texts matching the keyword input in the keyword input window automatically and indicates the search result as shown in the screen 255 of FIG. 2D.

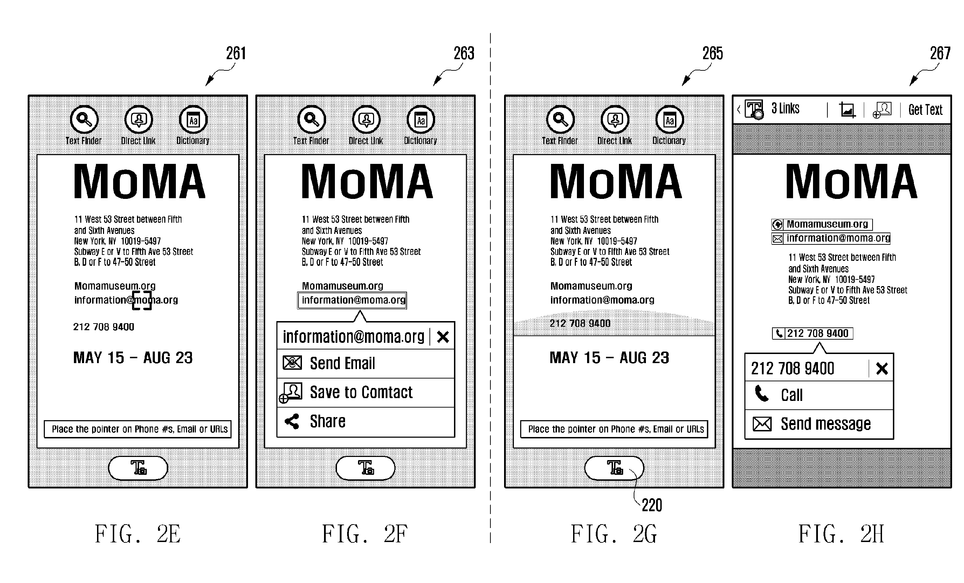

FIGS. 2E through 2H illustrate screens displayed in association with the direct link item 213 in FIG. 2A. If the direct link item 213 is selected, the control unit 100 presents the text pointer 230 as shown in the screen 261 of FIG. 2E and, if the text pointer is placed on the character image for text recognition, the control unit 100 recognizes the text at the corresponding position and displays action items below the text as shown in the screen 263 of FIG. 2F. At this time, the action item display region displays the action items executable in correspondence to the recognized text and characters. If a capture item (scan icon) 220 is selected in the preview mode as shown in the screen 265 of FIG. 2G, the control unit 100 detects the selection and recognizes the texts corresponding to the type available in the link mode as shown in the screen 267 of FIG. 2H. Here, the texts recognizable in the link mode include an email address, a URL, a phone number, or a SNS identifier for use in communication. In the state that the texts recognizable in the link mode are recognized, if the user select one of the recognized texts, the plural action items executable in association with the selected text in the link mode are shown in the screen 267.

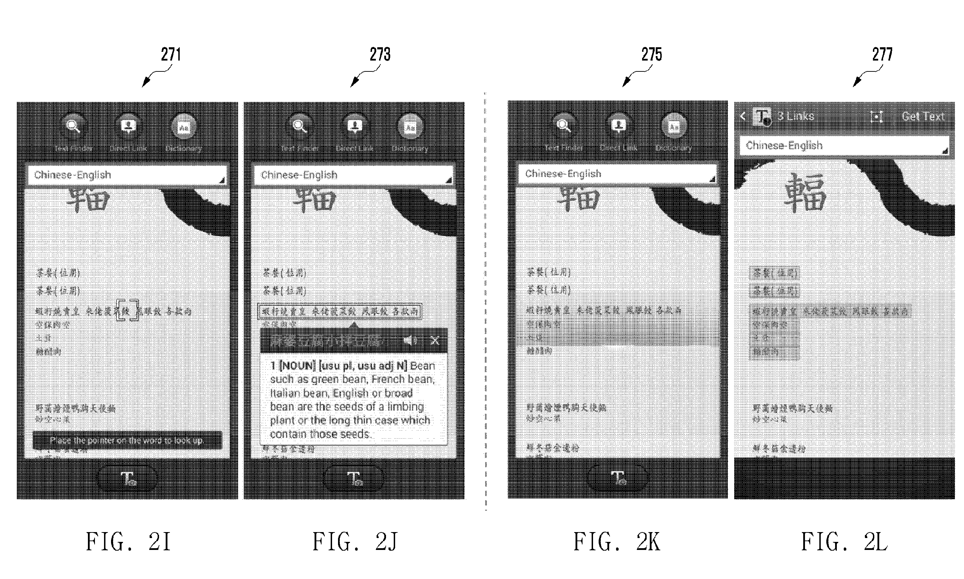

FIGS. 2I through 2L illustrate screens displayed in association with the dictionary mode (translator) item 215 in FIG. 2A. If the dictionary item 215 is selected, the control unit 100 presents the text pointer 230 on the screen as shown in the screen image 271 of FIG. 2I. If the text pointer 230 is placed on a text image, the control unit 100 automatically recognizes the text at the corresponding position as shown in the screen 273 of FIG. 2J and the lexical meaning of the word(s) included in the text below. At this time, the lexical meaning of the text is provided in such a way of presenting the brief meanings of the words and then detailed description thereon. If the capture item (scan icon) 220 is selected in the preview mode as shown in the screen 275, the control unit 100 detects the selection and recognizes the texts recognizable in the link mode as shown in the screen 277 of FIG. 2L. If the user selects one of the recognized texts, the control unit 100 presents the lexical meaning of the selected text.

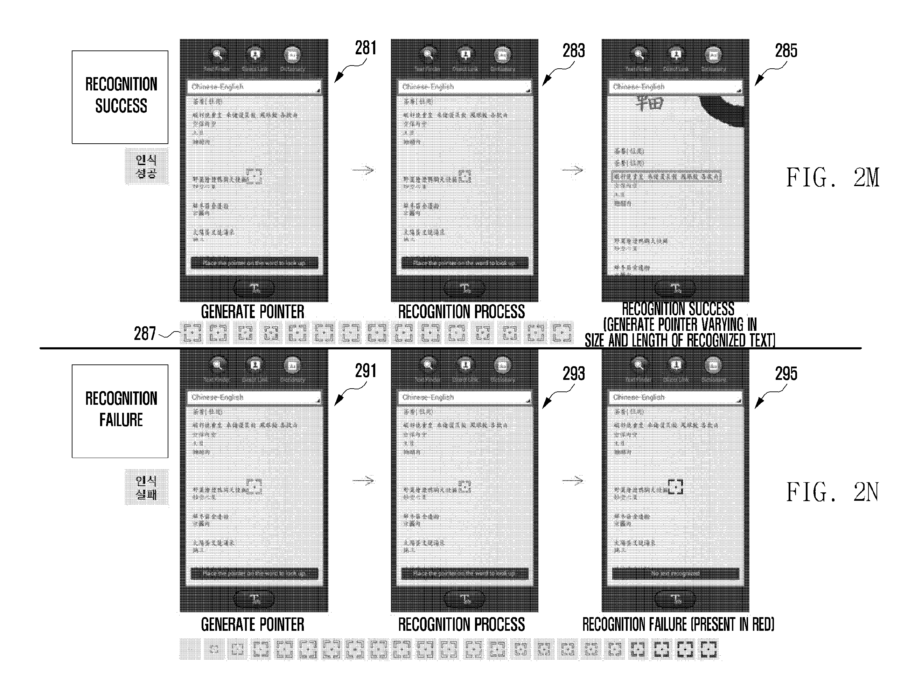

In the processes of recognizing texts as shown in FIGS. 2B to 2L, the control unit 100 changes the size of the text pointer 220 according to the character size and length of the recognized text. Also, the control unit 100 can change the color of the text pointer 23 to indicate whether the recognition result is successful or not. That is, the text pointer 230 changes in size according to the size of the text recognized as denoted by reference number 287 while indicating the recognition progress state with a certain animation in the case that the recognition is performed correctly as shown in the screens 281 to 285 of FIG 2M. If it is determined that the recognition has been done correctly, the text pointer 230 maintains its initial color (e.g. white). However, the text pointer 230 can change in size according to the size of the text recognized as denoted by reference number 297 while indicating the recognition progress state with a certain animation in the case that the recognition is performed incorrectly as shown in the screens 291 to 295 of FIG 2N. If it is determined that the recognition has been done incorrectly, the text pointer 230 changes from the initial color (e.g. white) to another color (e.g. red). At this time, if the recognition ends normally, the control unit 100 highlights the recognized text as shown in the screen 285.

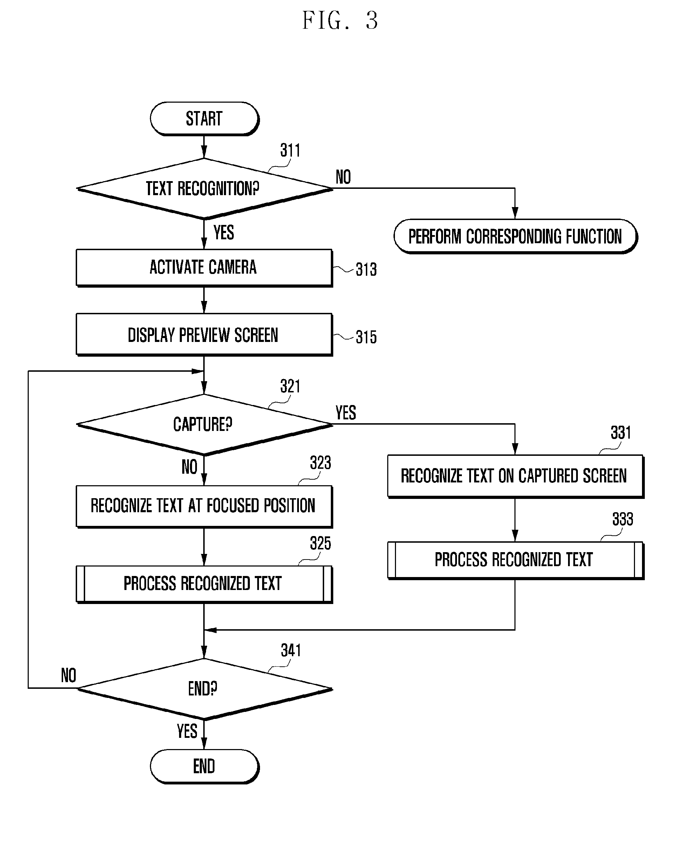

FIG. 3 illustrates a text recognition mode procedure of the mobile terminal according to embodiments of the present disclosure.

Referring to FIGS. 1 to 3, when the user executes a text recognition mode (pointer and) application, the control unit 100 detects this at block 311 and activates the camera 160 and display the key screen shown in FIG. 2A at block 313. Next, the control unit 100 executes the preview mode operation to display the image input from the camera 160 on the screen of the display unit 130 at block 315. In this case, the screen image 240 of the display unit 130 includes the image taken by the camera 160. In the text recognition mode, the user may select one of recognition mode items 210 in such a way of executing the text recognition application and making a touch gesture to a target mode item in the state that the key careen is presented as shown in FIG. 2A. In the text recognition mode, if the text pointer 230 is placed (or focused) onto a text image, the control unit 100 recognizes the text at the position of the text pointer 323 and analyzes the recognized text to display the action items corresponding to the recognized text on the screen of the display unit 130 in the form of a popup window at block 325. If one of the action items is selected by the user (with a finger touch made on the first touch panel 140 or a pen touch made on the second touch panel 150), the control unit 100 detects this and executes the command mapped to the corresponding action item at block 325.

The text pointer 230 is placed at a certain position on the screen image 240 according to the user's manipulation (e.g. finger touch on the first touch panel or pen touch on the second touch panel). In the following description, it is assumed that the initial position of the text pointer 230 is fixed at the center of the screen. The selected text provides at least one action item associated with the function or meaning corresponding to the recognized text.

If the capture item 220 is selected with a touch gesture made on one of the first and second touch panels 140 and 150 in the text recognition mode, the control unit 100 detects the touch at block 321 and captures the image input through the camera 160 as a still image to recognize texts in the capture still image in block 331. At this time, the control unit 100 highlights the texts related to the current mode among the texts recognized on the screen image. Afterward, if the user places the text pointer 230 at a specific text, the control unit 100 analyzes the text at which the text pointer 230 is placed and displays the action items corresponding to the recognized text in association with the recognition mode at block 333. If one of the action items is selected with a user's touch gesture (finger touch or pen touch), the control unit 100 detects this and executes the action represented by the action item corresponding to the recognized text information according to the selected action item.

If the user requests for terminating the procedure before or after the completion of the text recognition operation, the control unit 100 detects the request for termination at block 341 and ends the text recognition procedure.

When an error occurs in the text recognition operation, the user may correct the erroneous characters. Upon detecting the text recognition error, the control unit 100 controls to change the color of the text pointer 230 (to red in this embodiment). If the user selects a character with the text pointer 130, the control unit 100 controls to display the keypad (SIP keyboard) capable of inputting text at a predetermined position (bottom side of the display region in this embodiment) of the screen image 150 displayed on the display unit 130 along with recommended characters that can substitute the erroneous character. At this time, the user is capable of correcting the erroneous character in such a way of placing the text pointer 130 at the position of the erroneous character and entering a substitute character.

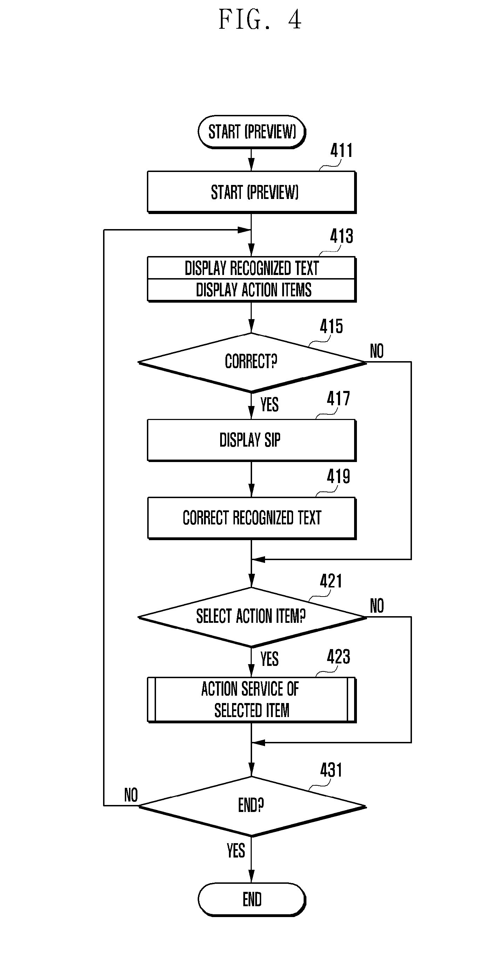

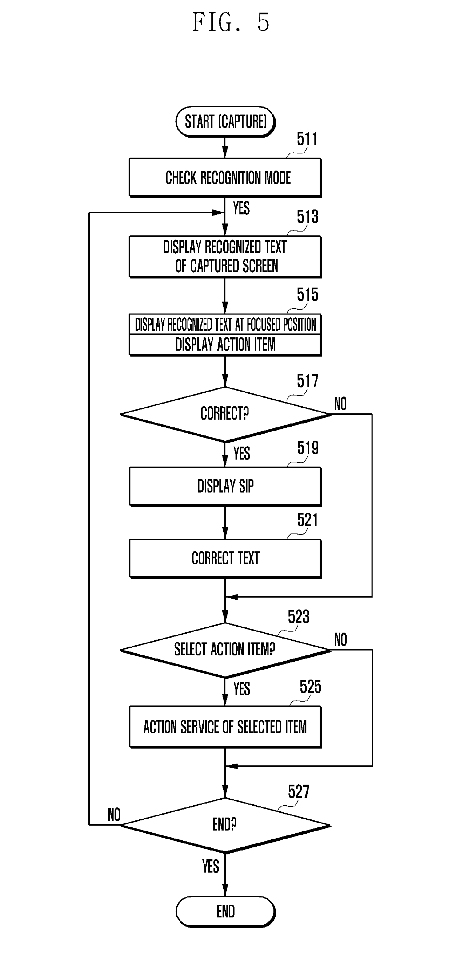

FIG. 4 illustrates the preview mode text recognition procedure of the mobile terminal according to embodiments of the present disclosure. FIG. 5 illustrates the captured image mode text recognition procedure of the mobile terminal according to embodiments of the present disclosure.

Referring to FIG. 4, the procedure starts in the state that the preview screen is displayed with the activation of the camera 160 in the text recognition mode as shown in FIG. 3. In this state, the display unit 130 displays the key screen as shown in FIG. 2A which shows the image input through the camera as the preview image. In the preview mode, the control unit 100 analyzes the recognition mode at block 411. Here, the recognition mode includes the text finder mode for scanning the screen image, a direct link mode for recognizing texts associated with communication functions to execute the communication functions directly, and the dictionary mode for providing brief meaning and/or detail on the word selected among the recognized text in the screen image. After checking the current recognition mode, the control unit 100 performs text recognition on the screen image and displays the action items associated with the recognized text. That is, the user places the text pointer 230 at the position of the target text on the document or image input through the camera (e.g. advertisement board image). Then the control unit 100 recognizes the text at the position where the text pointer 230 is placed at block 411 and displays the action items corresponding to the recognized text. Here, the action items include the items executing the actions corresponding to the recognized text. The action items can have distinct shapes according to the communication function associated with the recognized text. The action item of the dictionary mode provides brief content of lexical definition of the corresponding word and, if the recognized word has multiple meanings, presents representative meanings of the corresponding word by part of speech such as verb and noun.

If a recognition error occurs, the control unit 100 controls such that the text pointer 230 indicates the recognition error by changing its color. If the recognition error is indicated or if the recognition error by the user, the user may select the position of the misrecognized character such that the control unit 100 detects the selection by means of one of the first and second touch panels 140 and 150 at block 415 and displays a keypad (SIP keyboard) for error correction at a predetermined position of the screen image 240. If the user inputs a substitute character using the SIP keyboard, the control unit 100 corrects the misrecognized character with the substitute character at block 419.

After correcting the misrecognized character or performing step 419, if one of the action items is selected, the control unit 100 detects this at block 421 and executes the action service represented by the selected item at block 423. At this time, if the recognition mode is the direct link mode, the communication application corresponding to the recognized text is executed automatically. If the recognition mode is the dictionary mode, the definition of the selected word is displayed.

The text recognition and action service continues until the procedure ends. The procedure ends when the action service ends or in response to the user request for terminating the procedure. If a procedure termination request is generated, the control unit 100 detects this at block 431 and ends the recognition mode.

Referring to FIG. 5, the procedure starts in the state that the still image captured by touching the capture item 220 after the camera 160 is activated in the text recognition mode as the screen image. In this state, the display unit 130 displays the key screen as shown in FIG. 2 and, the captured image is presented as the screen image 240. In the capture recognition mode, the control unit 100 checks the recognition mode at block 511. As described above, the recognition mode can be any of a text finder mode, direct link mode, and dictionary mode. After checking the recognition mode, the control unit 100 scans the captured screen image to recognize the entire texts at block 513. If the recognition mode is the direct link mode, the control unit 100 controls such that the texts related to communication are highlighted among the entire texts. If the recognition mode is the dictionary mode, the control unit 100 controls such that the texts are highlighted as a word unit. In the state that the entire texts have been recognized, the user may select the text for action service by placing the text pointer 230 at the position of the corresponding text among the recognized texts. Then, the control unit 100 indicates the text recognized at the position where the text pointer 230 is placed at block 515 and displays the action items corresponding to the recognized text. The action items are the items related to communications corresponding to the recognized texts in the direct link mode or the brief definitions of the words included the recognized text in the dictionary mode.

If a recognition error occurs, the control unit 100 controls such that the color of the text pointer 230 is changed to indicate the occurrence of the recognition error. If the recognition error is presented to or checked by the user, the user may select the position of the misrecognized character such that the control unit 100 detects this at block 517 and displays a keypad (SIP keypad) for character correction at a predetermined position of the screen image 240 at block 519. If the user enters a substitute character using the SIP keypad, the control unit 100 corrects the misrecognized character with the substitute character at block 521.

After correcting the misrecognized character in block 521, if one of the action items is selected, the control unit 100 detects this at block 523 and executes the action service corresponding to the selected item at block 525. At this time, the action service can include executing a communication application corresponding to the recognized text in the direct link mode or presenting the detailed definition on the word selected in the dictionary mode.

If a procedure termination request is detected, the control unit 100 detects this at block 527 and ends the captured screen text recognition mode.

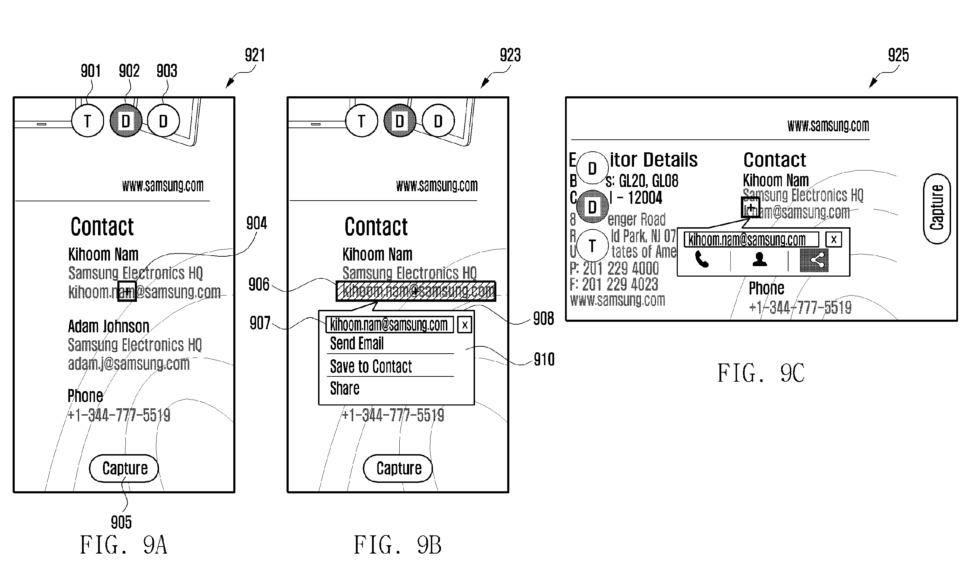

A description is made of the text recognition procedures in the direct link mode and the dictionary mode in detail hereinafter. In the following description, the text finder mode item is denoted by "T" (as shown in by item 901 of FIG. 9A), the direct link item is denoted by "D" (as shown in by item 902 of FIG. 9A), the dictionary mode item is denoted by "D" (as shown in by item 903 of FIG. 9A), and the capture mode item is denoted by "capture" (as shown in by item 905 of FIG. 9A).

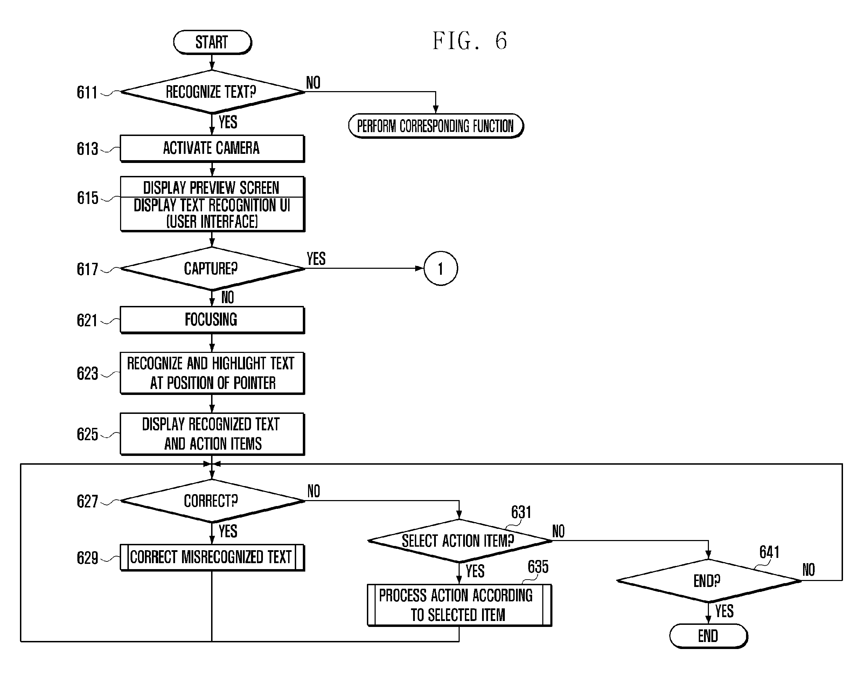

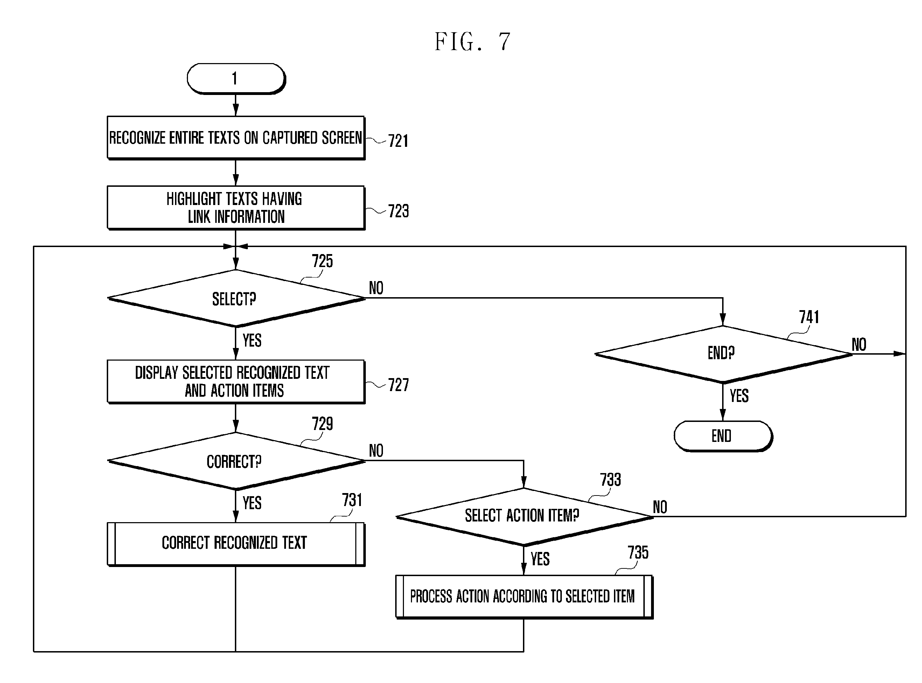

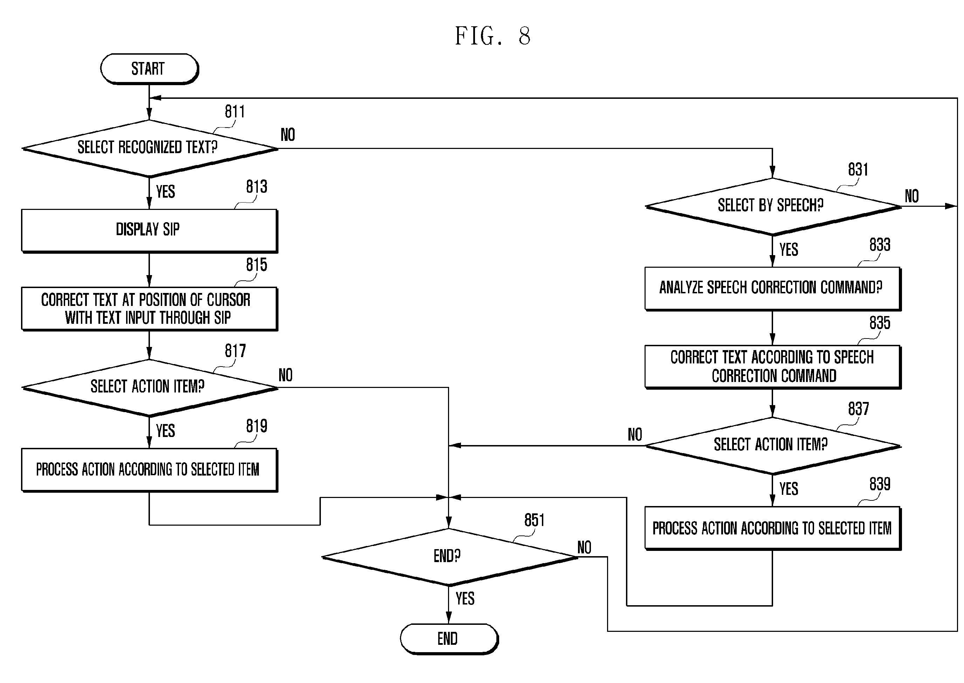

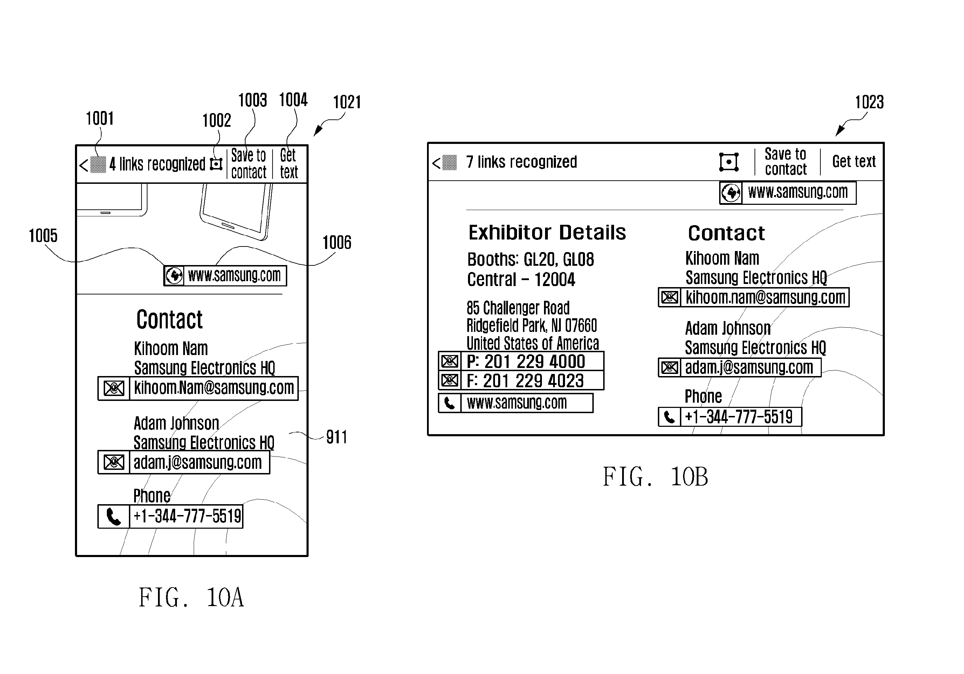

First, a description is made of the recognition method in the link mode. FIG. 6 illustrates the procedure of recognizing text from a preview image in the direct link mode according to embodiments of the present disclosure. FIG. 7 illustrates the procedure of recognizing text of a capture image in the direct link mode according to embodiments of the present disclosure. FIG. 8 illustrates, more particularly, the process of correcting the error in the recognized text in FIGS. 6 and 7. Here, the preview image text recognition in the direct link mode is useful in performing text recognition on the business card, advertisement leaflet, and signboard having the communication-related information such as a phone number and/or an email. The captured screen image text recognition is useful in performing text recognition on the brochure and pamphlet having various communication-related text information. FIGS. 9A to 9H are diagrams illustrating screens displayed in association with the preview image text recognition procedure according to embodiments of the present disclosure, and FIGS. 10A to 10E are diagrams illustrating screens displayed in association with the captured screen image text recognition procedure according to embodiments of the present disclosure.

Referring to FIG. 6, if the direct link mode is selected, the control unit 100 detects this at block 611 and activates the camera 160 at block 613. The control unit 100 displays the image input form the camera unit 160 on the screen of the display unit 130 as a live view and presents a key screen (text recognition UI) as shown in FIG. 2A at block 615. At this time, the display unit 130 displays the screen 921 of FIG. 9A. Here, the recognition mode corresponds to the direct link item 902, and the screen image can be the live image input from the camera 160 in the preview mode. If the user places the text pointer 904 at a specific position (here, at the mail text image) in the preview mode, the control unit 100 recognizes and highlights the text on the line 906 where the text pointer 904 is placed as shown in the screen 923 of FIG. 9B and displays the recognized text 907 and action items 910 corresponding to the recognized text at block 625. Here, since the recognized text 907 is an email address, the control unit 100 displays the action items for executing text messaging and email (e.g. 'send email,' 'save to contact,' 'share,' etc.). In FIG. 9C, a screen 925 is displayed in the landscape mode such that the text recognition is performed on the landscape mode preview image.

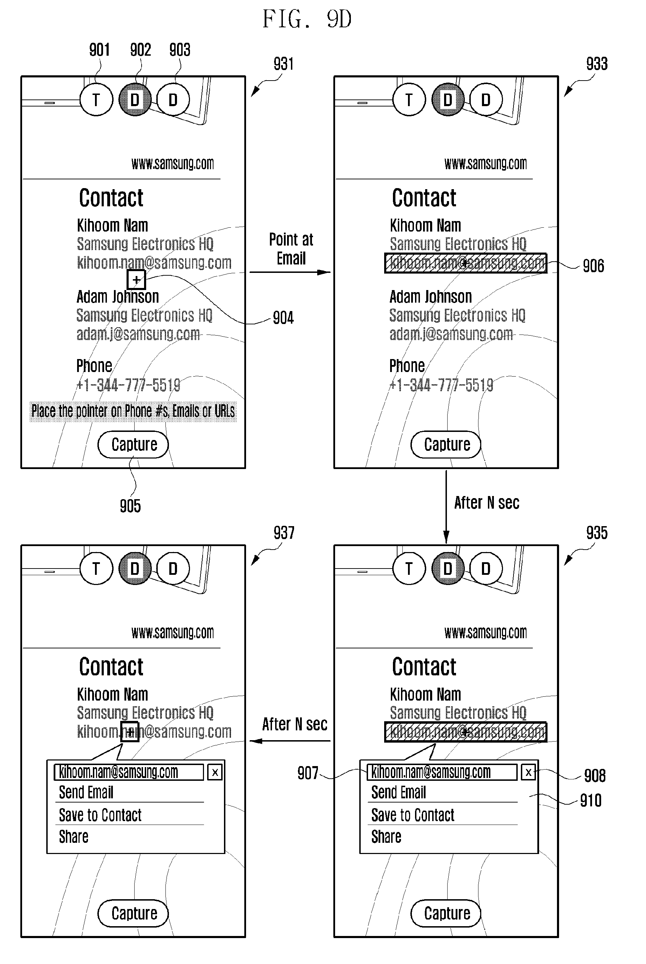

As described above, the direct link mode-based text recognition method displays the real time mode of the direct link as the main screen in execution of the application. The direct link mode-based text recognition method is capable of recognizing the link information where the text pointer is placed on the screen image to provide the direct link menu items (action items) available for the property of the link information. Referring to FIG. 9D, if the text pointer is placed at a position of an email address on the preview image as shown in the screen 931, the control unit 100 performs text recognition on the email address where the text pointer 904 is placed and highlights the recognized text, i.e. the email address. At this time, the control unit 100 may perform text recognition in unit of line and extract the text related to the link information from the text recognized in unit of line. Afterward, the control unit 100 displays the recognized email address and the related action items in the form of a popup window as shown in the screen 935 and, if the recognition has been performed successfully, the highlight effect is removed such that only the action items are displayed along with the text point.

An error may occur in the process of recognizing text on the line where the text pointer 904 is placed. In this case, if the user makes a touch at the position where the error has occurred in a recognized text 907 presentation region, the control unit detects this error at block 627 and corrects the misrecognized character at block 629. In block 629, the misrecognized character is corrected in the procedure as shown in FIG. 8.

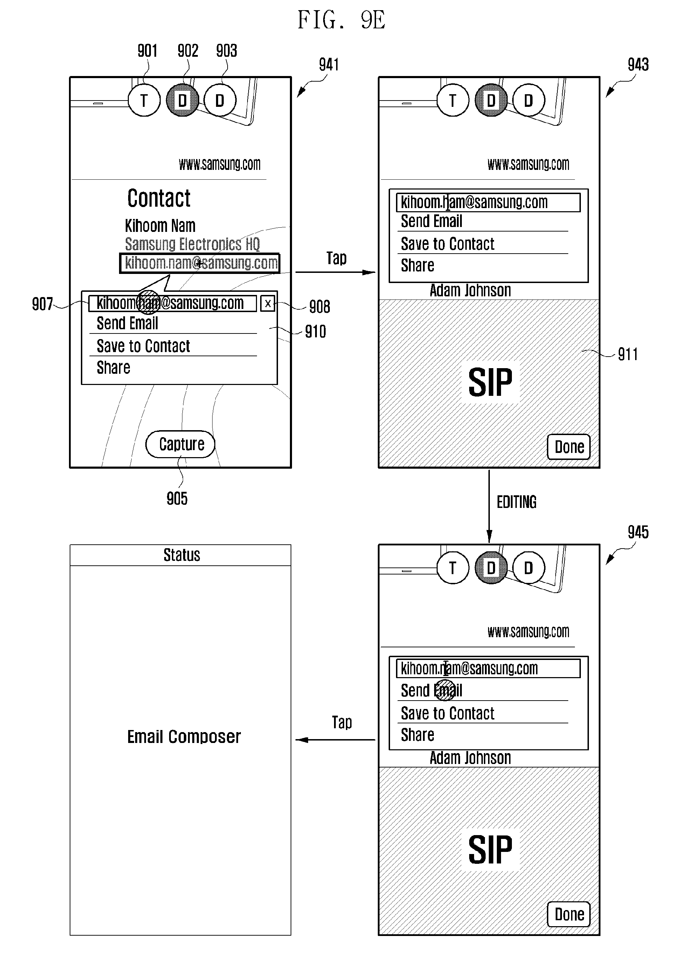

Referring to FIG. 8, if the user makes a touch input to a certain position of the recognized text 907 presentation region, the control unit 100 detects that a position is selected for correcting text at block 811. The touch gesture may be a finger touch gesture or a pen touch gesture, and the control unit 100 detects the position where the touch gesture is made (that is, the position of the misrecognized character) by means of one of the first and second touch panels 140 and 150. FIG. 9E is directed to the case where "n" is misrecognized as "h" (that is, the text image of 'nam' is misrecognized as 'ham'). In this case, if the position of the misrecognized character is tapped in the recognized text 907 presentation region as shown in the screen 941, the control unit 100 displays the SIP keyboard 911 on the screen of the display unit 130 as shown in the screen 943. Afterward, the user enters a substitute character using the SIP keyboard 911, the control unit 100 receives this input at block 815 and corrects the misrecognized character with the substitute character input by the user as shown in the screen 945. If an action item is selected in this state, the control unit 100 detects this at block 817 and executes the action corresponding to the selected action item. However, if the procedure is terminated without selection of any action item, the procedure returns to the main routine of FIG. 6.

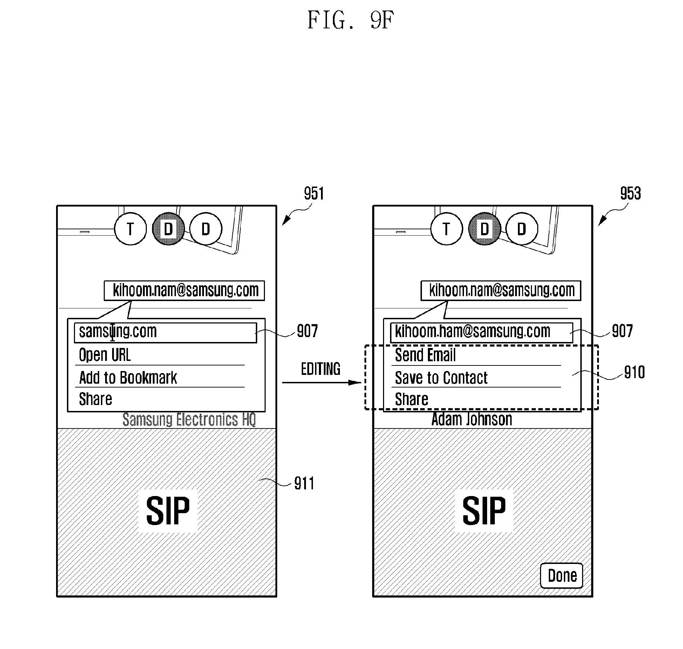

At this time, the misrecognition may be any of: the recognition failure of the entire text on the line where the text pointer is placed and the character recognition failure in which at least one character is misrecognized in the recognized text. In the former case, since there is no text recognized to display as denoted by reference numbers 291 to 297 of FIG. 2N, it is necessary to perform text recognition process again. In the latter case, however, the text recognition process has been performed successfully but at least one character is misrecognized in the text. This is the case when the misrecognition has occurred in the text of the link information as shown in FIG. 9E or when important text data is erroneous in the link information as shown in FIG. 9F. That is, if the misrecognized character is "@" in an email address as shown in FIG. 9F, the control unit 100 recognizes the email information (e.g., Kihoon@samsung.com) as a URL (samsung.com). In this case, the user is capable of correcting the link information misrecognized as URL to the original email address.

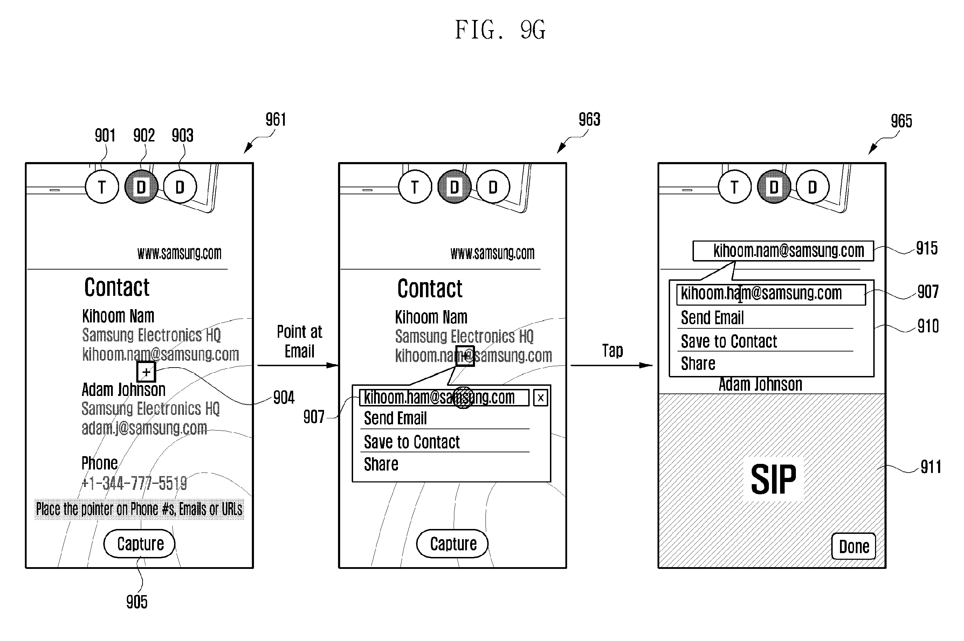

In the case of correcting the misrecognized text data through the procedure of FIG. 9E, the action items 910 are moved upward on the screen of the display unit 130 to secure the space for presenting the SIP keyboard 911. In this case, the text of the line on which the text pointer 904 is placed is hidden by the SIP keyboard 911 or the action items 910. In this case, the user cannot check the text to be corrected. Accordingly, in order to facilitate correcting the misrecognized text, the recognized text presentation region 915 for presenting the text hidden by the action items 910 or SIP keyboard 911 is further provided as shown in FIG. 9G. That is, if there is any misrecognized character is detected in the text where the text pointer 904 is placed and if the user selects the misrecognized character position, the control unit 100 displays the SIP keyboard 911 as shown in the screen 965 and displays the text above the recognized text 907 data and action items 910 as denoted by reference number 915. Accordingly, the user is capable of correcting the misrecognized text while viewing the text of the link information.

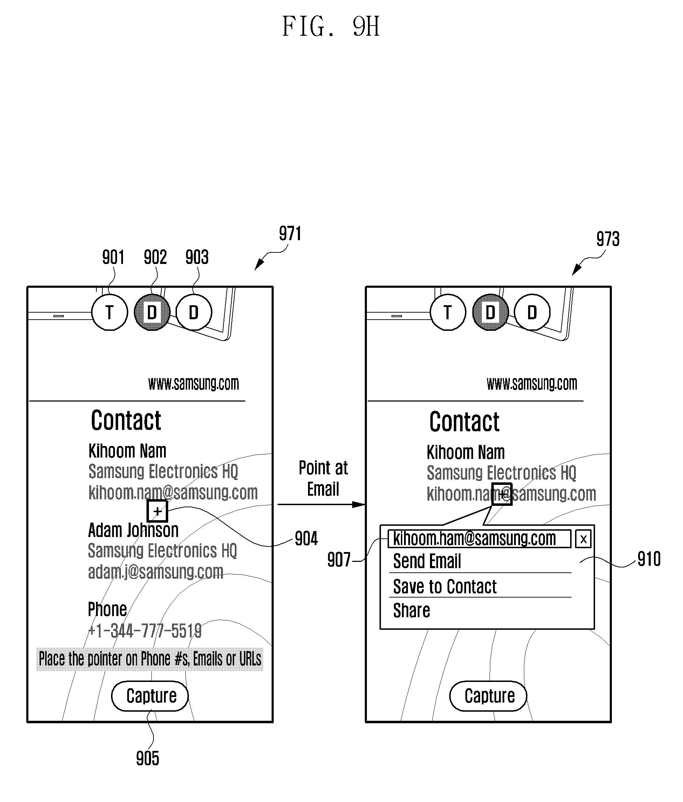

In the case that the speech recognition function is supported as shown in FIG. 9H, the misrecognized text may be corrected through speech recognition process. That is, if a misrecognized character is checked in the recognized text in the screen 973 in the state that the text is recognized on the preview image as shown in the screen 971, the user is capable of correcting the misrecognized character through speech recognition process. In this case, if the user makes a speech input to generate an 'edit' command, the control unit 100 performs speech recognition process to detect the 'edit' command and correct the misrecognized character according to the 'edit' command. Here, the speech command can be input with the speech of "delete all," "back space," and "alphabet character." Then, the control unit 100 corrects the misrecognized character according to the speech command and executes the action represented by the action item selected with speech command (e.g. 'send email,' 'save to contact,' 'share,' etc.) in association with the corrected link information.

When an 'edit' command' is input in the form of a speech command, the control unit 100 detects this at block 831, analyzes the speech edit command at block 833, and corrects the misrecognized character according to the analyzed speech edit command at block 835. Afterward, if an action item is selected, the control unit 100 detects this at block 837 and executes the action service of the selected item at block 839. At this time, the action item may be selected by speech input or touch gesture input to the action item to execute corresponding action.

If the capture item is selected at block 617 of FIG. 6, the control unit 100 captures the current screen image as a still image and performs text recognition on the captured screen image to recognize the link information. The capture image recognition may be performed as shown in FIG. 7. The captured screen image text recognition is advantageous to recognize plural link information items included in the document images such as a brochure and a pamphlet.

Referring to FIG. 7, the control unit 100 captures the preview mode screen image as a still image in response to a capture request, performs text recognition on the entire still image at block 721, and highlights the texts including link information items at block 723 as shown in the screens 1021 and 1023 of FIG. 10A and 10B respectively. A recognition result in the portrait mode screen image 1021 is shown in FIG. 10A. A recognition result in the landscape mode screen image 1023 is shown in FIG. 10B. In FIG. 10A, reference number 1001 denotes the indication of a number of texts and link information items recognized in the captured screen image, reference number 1002 denotes the indication of the capture screen crop mode, reference number 1003 denotes the indication of 'save to contact' presented when there is any direct link recognized on the screen, and reference number 1004 denotes the indication of 'text parsing' onto the entire texts. The recognized link information is presented with the icon indicating the type of the direct link ad denoted by reference number 1005 and text recognized as the link information as denoted by reference number 1006. Here, the type of the link information can be any of: a URL, an email, a phone number, an address, or a SNS identifier; and the recognized link information items and icons are highlighted.

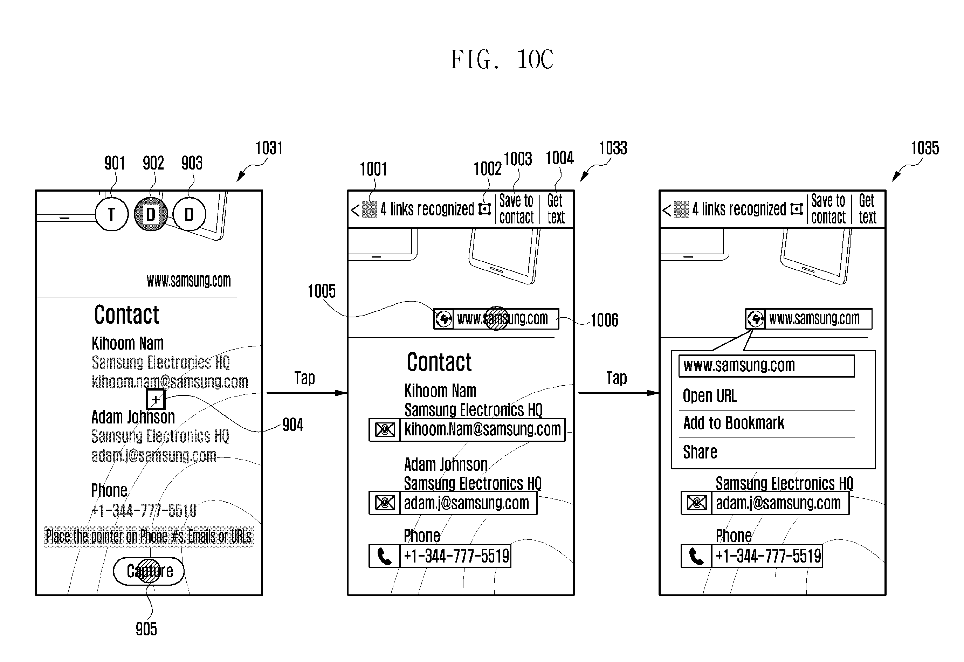

If the user selects a specific link information in the state that the link information items are displayed as sorted by type, the control unit 100 detects this at block 725 and displays the text of the selected link information and the action items associated with the corresponding link information at block 727. As shown in FIG. 10C, if a capture request is input in the preview mode, the control unit 100 recognizes the texts as shown in the screen 1031, highlights the texts of the recognized link information items as denoted by reference number 1003, and displays the indication 1001 of the number of recognized link information. If the text of a specific text is selected in the above state, the control unit 100 detects this and displays the text of the selected link information and action items associated with the link information as shown in the screen 1035. At this time, the action items are sorted by type of the link information as shown in Table 1 (below).

**Table 1**

| | |
|---|---|
| Link information | Action item |
| e-mail | send email, add to contact(view contact), share |
| Phone | call, send message, add to contact(vies contact), share |
| URL | open URL, add to book mark, share |

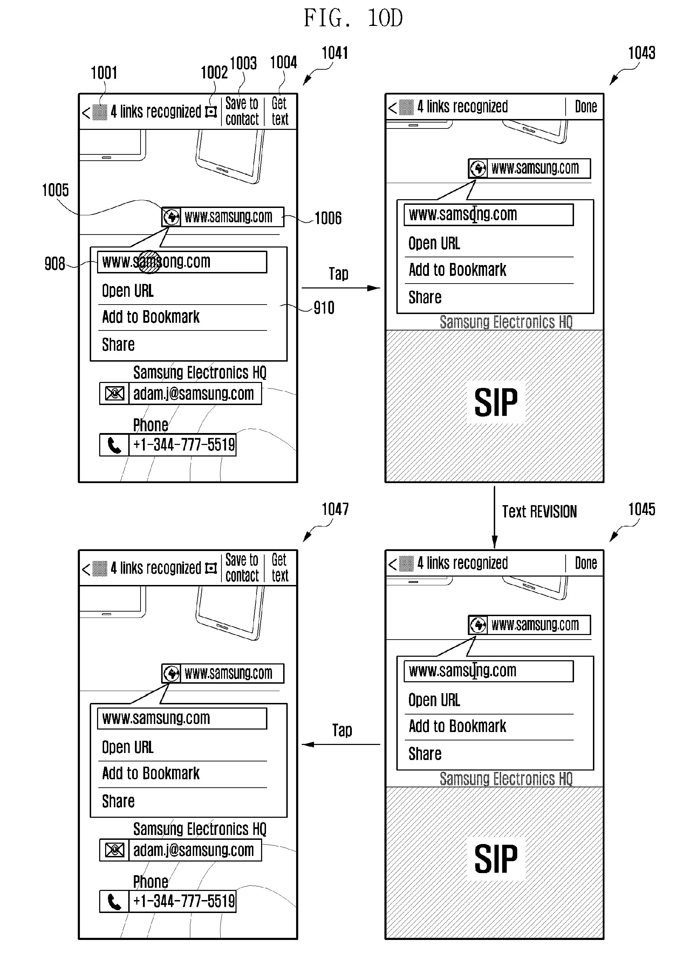

An recognition error may occur in the text recognition process. In this case, if the user selects the misrecognized character of the link information, the control unit 100 interprets this as recognized text edit command at block 729 and displays the SIP keyboard on the screen 1043 for correcting or editing the misrecognized character at block 731. At this time, the misrecognized character is corrected through the procedure of FIG. 8. Referring to FIG. 10D, if the misrecognized text 1006 of the link information is selected as shown in the screen 1041, the control unit 100 displays the recognized text 908 of the selected link information and action items 910 associated with the link information. If a specific link information (e.g., www.samsung.com) is selected in the above state, the control unit 100 displays the recognized text corresponding to the selected link information and action items associated with the selected link information. In the state that there is any error in the recognized text (e.g., misrecognized text of "samsong" as shown in the screen 1043), if the user makes a touch gesture (tap) onto the misrecognized character, the control unit 100 displays the SIP keyboard. If the user enters a substitute character using the SIP keyboard, the control unit 100 corrects the misrecognized character with the substitute character as shown in the screen 1045. If the user makes a touch gesture (tap) after completing the correction, the control unit 100 ends the correction process and displays the correction result as shown in the screen 1047.

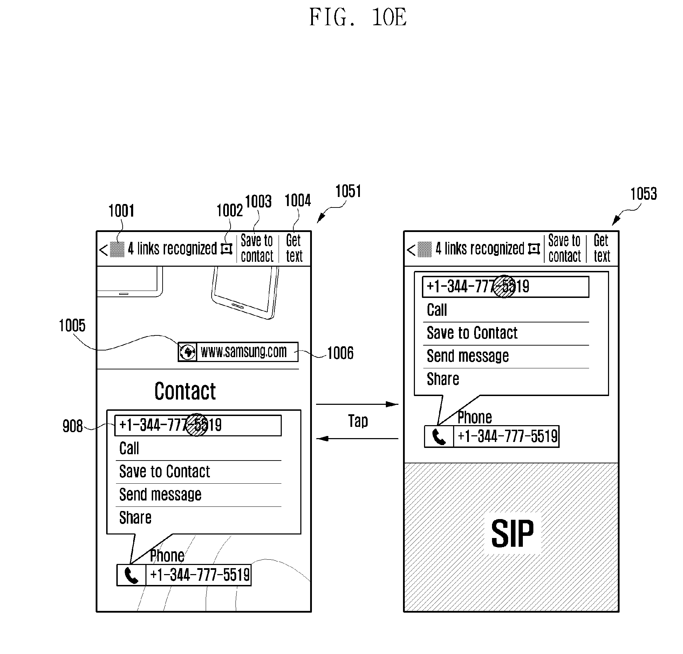

In the captured screen recognition process, plural link information items can be recognized. The link information items can be arranged at the top and/or bottom of the screen. If the link information is selected at the bottom area, the recognized text and the action items are displayed above the link information as shown in the screen 1051 of FIG. 10E. If a tap is detected on the recognized text for correction, the SIP keyboard cannot be displayed at the bottom region. In certain embodiments of the present disclosure, if the action items are displayed at the bottom region of the screen, the control unit 100 displays the text and action items of the selected link information at the top region of the screen and presents the SIP keyboard at the bottom region of the screen.

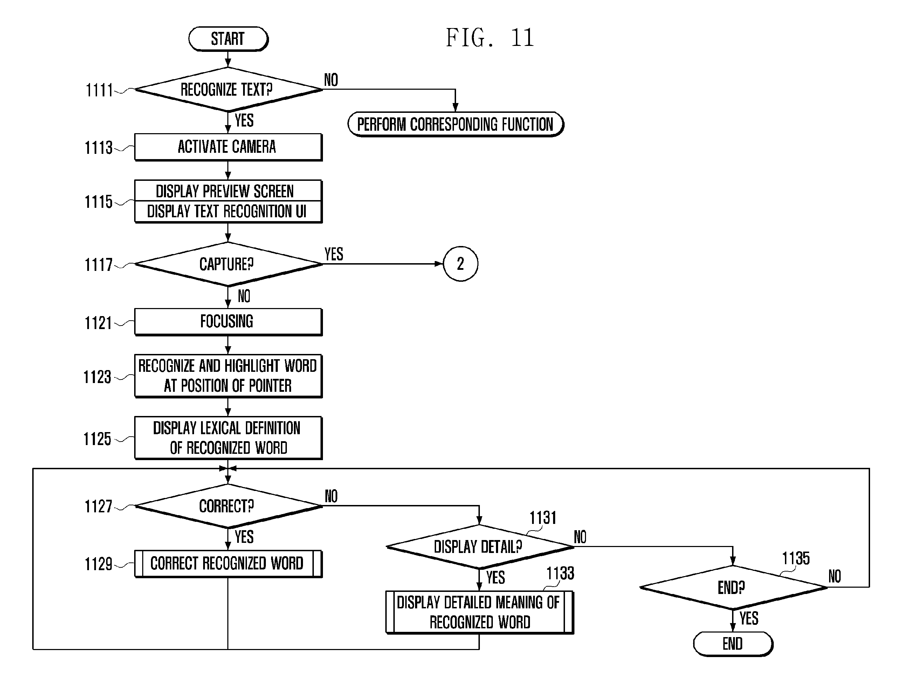

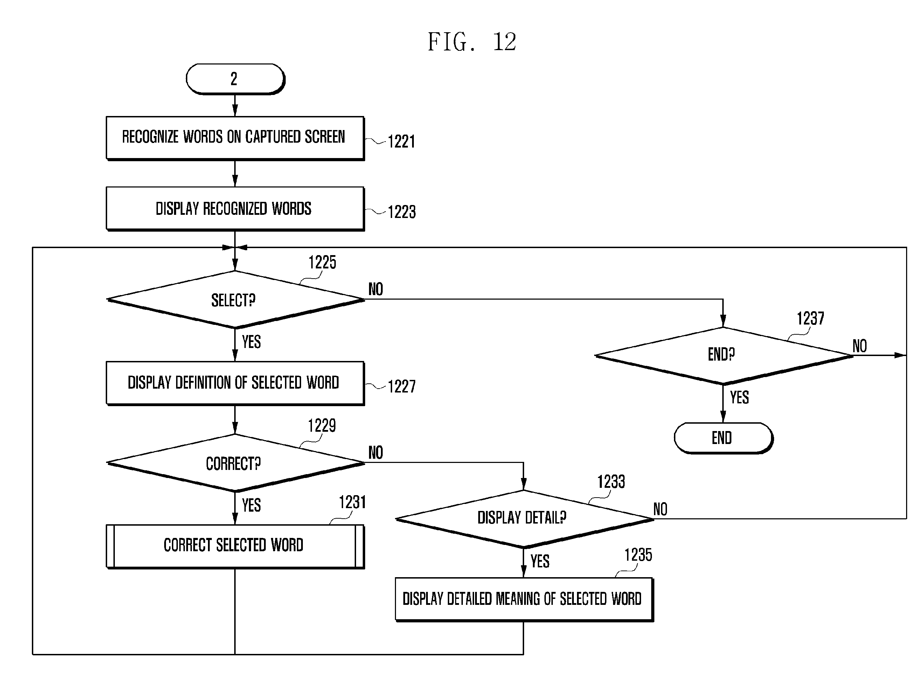

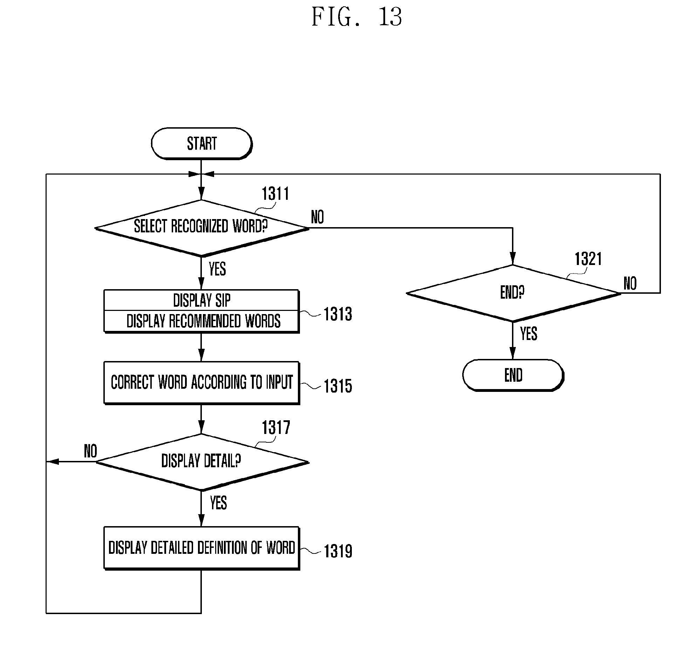

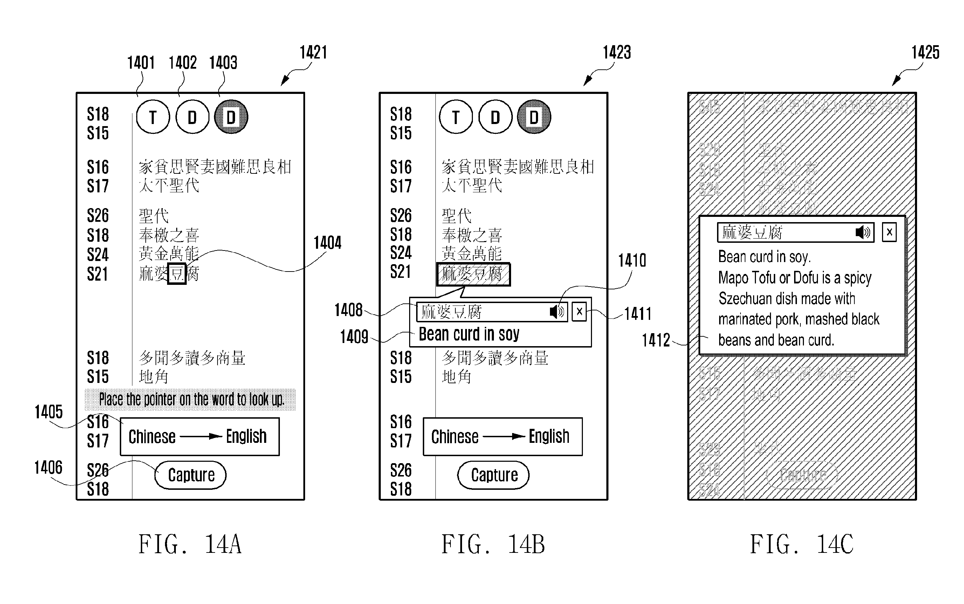

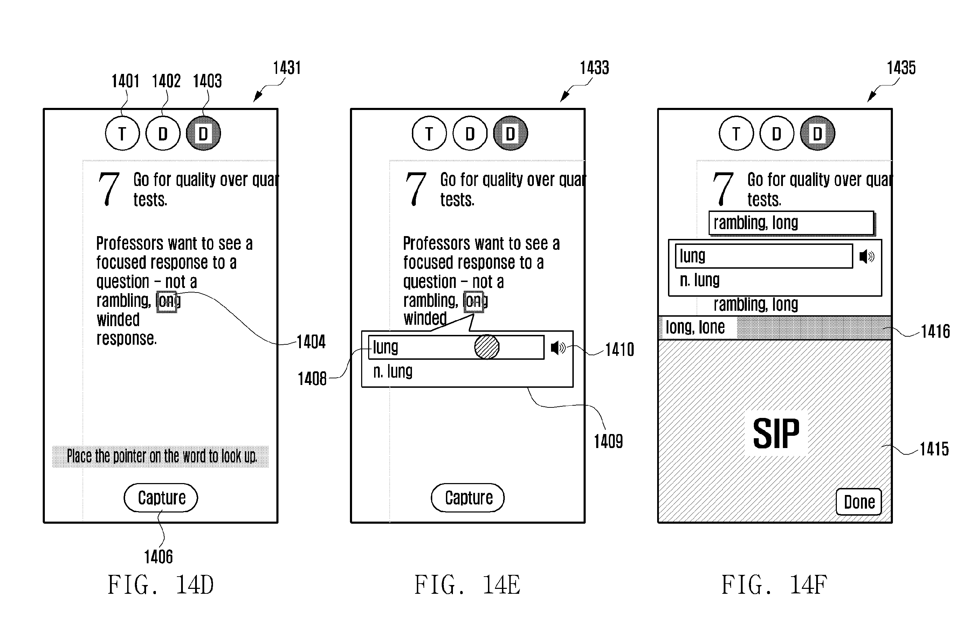

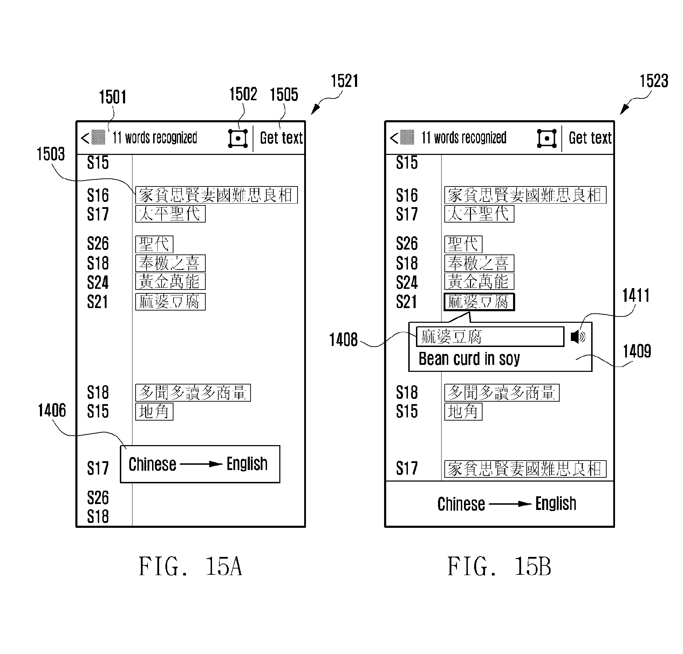

FIG. 11 illustrates the procedure of the recognition method of recognizing words from the preview image in the dictionary mode according to embodiments of the present disclosure. FIG. 12 illustrates a process of recognizing all words included in the captured image in the dictionary mode according to embodiments of the present disclosure. FIG. 13 illustrates, more particularly, the process of correcting error in the recognized word in FIGS. 11 and 12. FIGS. 14A through 14F are diagrams illustrating screens displayed in association with the preview image text recognition procedure in the dictionary mode according to embodiments of the present disclosure. FIGS. 15A and 15B illustrate screens displayed in association with the captured image text recognition procedure in the dictionary mode according to embodiments of the present disclosure.

Referring to FIG. 11, the control unit 100 detects if the selected recognition mode is the dictionary mode at block 1111. If the selected recognition mode is the dictionary mode, the control unit 100 activates the camera 160 at block 1113. Here, it is assumed that the dictionary mode is configured to translate Chinese to English. The control unit 100 controls the display unit 130 to display the image input through the camera 160 in live view and the key screen (text recognition UI) as shown in FIG. 2A at block 1115. At this time, the display unit 130 displays the screen images as shown in the screen 1421 of FIG. 14A. Here, the recognition mode is the dictionary mode activated by selecting the dictionary mode item 1403, and the screen image may be the live image input in the preview mode. If the user places the text pointer 1404 at a specific position (Mapo tofu in Chinese), the control unit 100 recognizes and highlights the text (for example, one or more words herein) on the line where the text pointer 1404 is placed as shown in the screen 1423 of FIG. 14B and displays the recognized text 1408 and brief lexical definition on the recognized text (Chinese) and the action items (English) 1409 around the text pointer 904 (below the text point herein). If the word has one meaning the action item 1409 is provided in such a way of presenting a brief translation thereon as shown in the screen 1423 of FIG. 14B and, otherwise it has plural meanings, presenting plural lexical meanings of the corresponding word. The action item 1409 is presented along with a TTS item 1410 and, if the TTS item 1410 is selected, the control unit 100 controls a speech synthesizer to output the information on the selected word in speech. At this time, the speech output may be the recognized text (Chinese pronunciation of Mapo tofu herein) and brief lexical meaning (definition in English). If the delete item 1411 is selected, the control unit 100 deletes the recognition results 1408 and 1409.

Here, the action item 1409 of providing brief definition is capable of being used to execute a function corresponding to the action item in the direct link mode. For example, if a touch gesture (tap) is made onto the brief definition item 1409 in the state of providing the lexical meaning as shown in screen 1423 of FIG. 14B, the control unit 100 detects this as a command requesting for detail at block 1131 and displays the detailed lexical definition on the recognized word as shown in the screen 1425 of FIG. 14C at block 1133.

As described above, the dictionary mode text recognition method recognizes the text at the position where the text pointer is placed on the screen with the image input through the camera 160 and provides the action item of presenting the brief lexical definition on the recognized text in the state that the text recognition application is running. In the case that the text (word) selected with the text pointer 1404 has plural meanings, the control unit 100 displays the plural lexical meanings of the word in the form of the action item as shown in the screen 1423 of FIG. 14B and, if one of the meanings is selected (tapped), presents the detail of the selected meaning as shown in the screen 1425 of FIG. 14C.

When performing text recognition at the position wherein the text pointer is placed, a recognition error may occur. In this case, if the user makes a touch at the position of the misrecognized character, the control unit 100 detects this at block 1127 and corrects the misrecognized character at block 1129. The misrecognized character may be corrected through the procedure of FIG. 13. FIGS. 14B through 14F illustrate screens displayed in association with the dictionary mode error correction procedure of FIG. 13.

Referring to FIGS. 13 and 14B through 14F, it is assumed that when the user places the text pointer 1404 at a position of the text image "long" the control unit 100 recognizes the text image as "lung." In this state, if the user makes a touch (tap) onto the recognized text region 1408, the control unit 100 determines that a command for correcting the recognized text has been input at block 1311. At this time, the touch input may be generated with a finger touch or a pen touch, and the control unit 100 detects the position of the touch (i.e., location of the misrecognized text) by means of one of the first and second touch panels 140 and 150. Then the control unit 100 controls the display unit 130 to display the SIP keyboard 1415 as shown in the screen 1435 at step 1313. At this time, the recognized text data 1408 and action item (the item for presenting brief lexical meaning of recognized word herein) is moved upward to secure the space for displaying the SIP keyboard 1415 as shown in the screen 1435 of FIG. 14F. Afterward, if the user enters a substitute character using the SIP keyboard 1415, the control unit 100 receives the substitute character to correct the misrecognized character at block 1315. In this state, if a word translation item is selected, the control unit 100 detects this at block 1317 and presents the detailed lexical meaning of the selected word at block 1319. However, if the termination is requested (delete item is selected), the control unit 100 detects the termination request at block 1321 and returns the procedure to the main routine of FIG. 11.

In the case that the misrecognition has occurred in the dictionary mode, the misrecognition can be corrected using the SIP keyboard 1415 or by selecting one of the recommended words. That is, when the SIP keyboard is displayed, the control unit 100 controls the display unit 130 to display recommended words 1416 similar to the misrecognized word. In this case, the user may correct the misrecognized word using the SIP keyboard 1415 or by selecting one of the recommended words 1416.

If the capture item 1406 is selected at block 1117 of FIG. 11, the control unit 100 captures the current screen image as a still image and performs text recognition on the captured screen image. At this time, the text recognition is performed as a word unit. The captured image text recognition is performed through the procedure of FIG. 12. FIG. 15 illustrates screen images displayed in association with the captured image text recognition procedure of the mobile terminal according to embodiments of the present disclosure.

Referring to FIGS. 12 and 15A and 15B, the control unit 100 captures the screen image displayed in the preview mode as a still image in response to the capture request and performs text recognition as a word unit on the still image at block 1221 and highlights the recognized words as shown in the screen 1521 at block 1223. In FIG. 15, reference number 1501 denotes an indicator of the number of words recognized on the captured screen, reference number 1502 denotes the indication of the capture screen crop mode, and reference number 1505 denotes the indication of 'get text.'

In the state that the text recognized on the captured screen image is presented as decomposed into words, if the user select a word, the control unit 100 detects this at block 1225 and displays the recognized text data 1408 of the selected word and the brief translation item 1409 at block 1227.

At this time, a recognition error may occur in the link information of the recognition result. In this case, if the selects the text data 1408 having the recognition error, the control unit 100 determines this selection as the recognized text data correction command at block 1229 and displays the SIP keyboard to allow for correcting or editing the text data at block 1231. At this time, the text data can be corrected through the procedure of FIG. 13. If the user selects one of brief definitions presented by the brief translation item 1409, the control unit 100 detects this at block 1233 and displays the detailed lexical meaning corresponding to the selected brief definition at block 1235.

The text recognition method of the present disclosure operates in such a way of setting a recognition mode for recognizing text, processes the image input through a camera to generate a recognition mode-specific text image, and executes a recognition mode-specific action corresponding to at least one of the texts recognized from the text image. Particularly, if the camera moves to place the pointer at a target text image in the preview image text recognition mode, the terminal recognizes the text on the line where the pointer is placed automatically so as to facilitate recognition process. When a recognition error occurs in the recognized text, a key pad is presented by selecting the misrecognized text to allow for error correction, resulting in improvement of user convenience.

The specification and drawings are to be regarded in an illustrative rather than a restrictive sense in order to help understand the present disclosure. Although the present disclosure has been described with an embodiment, various changes and modifications may be suggested to one skilled in the art. It is intended that the present disclosure encompass such changes and modifications as fall within the scope of the appended claims.

## Claims

1. A text recognition method of a mobile terminal, the method comprising:
displaying a preview image input from a camera;
recognizing a text image where a pointer is placed on the preview image;
displaying recognized text data and at least one action item corresponding to the recognized text data; and
executing, in response to the action item being selected, an action mapped to the selected action item.

2. The method of claim 1, further comprising:
displaying, in response to a recognized text data region for presenting the recognized text data being selected, a keyboard; and
correcting the recognized text data with text input through the keyboard.

3. The method of claim 2, wherein displaying the keyboard comprises:
arranging the keyboard at a bottom area of the screen; and
moving the selected text data, recognized text data, and action item upward on the screen.

4. The method of claim 3, wherein correcting comprises editing the text corresponding to the text data selected in the recognized text data region.

5. The method of claim 2, further comprising:
capturing a current screen image in response to a capture request in a preview mode;
recognizing text data on the text images of the captured screen;
displaying, in response to a certain text image being selected, the text data recognized from the text image and action item corresponding to the text data; and
executing, in response to the action item being selected, the action represented by the selected action item.

6. The method of claim 5, wherein the image includes plural mode items for select corresponding recognition modes and a capture item for capturing the screen image.

7. The method of claim 6, wherein the mode items include:
a link mode item for recognizing text images having link information on the screen image, and
a dictionary mode item for providing lexical definition of text recognized on the screen image.

8. The method of claim 7, wherein the link information comprises a Uniform Resource Locator (URL), email address, or phone number.

9. A text recognition apparatus of a mobile terminal, the apparatus comprises:
a camera configured to take an image including texts;
an input unit configured to receive an input signal;
a control unit configured to:
recognize a text image where a pointer is placed on the preview image,
display recognized text data and at least one action item corresponding to the recognized text data, and
execute, in response to the action item being selected, an action mapped to the selected action item; and
a display unit configured to display a text recognition execution screen under the control of the control unit.

10. The apparatus of claim 9, wherein the control unit is configured to control the display unit to display, in response to a recognized text data region for presenting the recognized text data being selected, a keyboard and to correct the recognized text data with text input through the keyboard.

11. The apparatus of claim 10, wherein the control unit is configured to arrange the keyboard at a bottom area of the screen and move the selected text data, recognized text data, and action item upward on the screen.

12. The apparatus of claim 11, wherein the control unit is configured to correct the text corresponding to the text data selected in the recognized text data region.

13. The apparatus of claim 9, wherein the control unit is configured to:
capture a current screen image in response to a capture request in a preview mode;
recognize text data on the text images of the captured screen,
display, in response to a certain text image being selected, the text data recognized from the text image and action item corresponding to the text data, and
execute, in response to the action item being selected, the action represented by the selected action item.

14. The apparatus of claim 13, wherein the image includes plural mode items for select corresponding recognition modes and a capture item for capturing the screen image.

15. The apparatus of claim 14, wherein the mode items include a link mode item for recognizing text images having link information on the screen image and a dictionary mode item for providing lexical definition of text recognized on the screen image.
